(19) Europäisches Patentamt
European Patent Office
Office européen des brevets

(11) **EP 4 567 688 A1**

(12) **EUROPEAN PATENT APPLICATION**
published in accordance with Art. 153(4) EPC

(43) Date of publication:
**11.06.2025 Bulletin 2025/24**

(21) Application number: **23865199.6**

(22) Date of filing: **22.08.2023**

(51) International Patent Classification (IPC):
**G06Q 10/00** (2023.01)        **G06Q 50/04** (2012.01)

(52) Cooperative Patent Classification (CPC):
**G06Q 10/00; G06Q 50/04**

(86) International application number:
**PCT/JP2023/030146**

(87) International publication number:
**WO 2024/057841 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022 JP 2022145473**

(71) Applicant: **JFE Steel Corporation
Tokyo 100-0011 (JP)**

(72) Inventors:
• **SUZUKI, Katsuya
Tokyo 100-0011 (JP)**
• **UNO, Masahiro
Tokyo 100-0011 (JP)**

(74) Representative: **Hoffmann Eitle
Patent- und Rechtsanwälte PartmbB
Arabellastraße 30
81925 München (DE)**

(54) **ENERGY OPERATION ASSISTANCE SYSTEM, INFORMATION PROCESSING DEVICE, DISPLAY TERMINAL DEVICE, ENERGY OPERATION ASSISTANCE METHOD, AND STEEL MILL OPERATION METHOD**

(57)     In an energy operation support system, an information processing device includes an information acquisition unit and an optimization unit. The optimization unit includes a cost optimization unit configured to calculate an operation condition of an energy facility based on an evaluation of a total energy operation cost of a steel mill, a $CO_2$ optimization unit configured to calculate an operation condition of the energy facility based on an evaluation of a total energy operation $CO_2$ emission amount of the steel mill, and a $CO_2$ cost evaluation unit configured to calculate a $CO_2$ cost index in energy operation of the steel mill based on the total energy operation cost of the steel mill calculated by the cost optimization unit and the total energy operation $CO_2$ emission amount calculated by the $CO_2$ optimization unit. A display terminal device includes an information acquisition unit, an information display unit, and an output unit.

FIG.1

EP 4 567 688 A1

**Description**

Field

The present invention relates to an energy operation support system, an information processing device, a display terminal device, an energy operation support method, and a steel mill operation method.

Background

Generally, a steel mill includes a large number of factories and a plurality of power generation facilities from the upstream process (blast furnace, coke oven, steelmaking process, and the like) to the downstream process (rolling process, surface treatment process, and the like), and the following energy operations (including gas, steam, and electricity) are performed. That is, by-product gases such as blast furnace gas (B gas) generated in a blast furnace, coke oven gas (C gas) generated in a coke oven, and LD converter gas (LD gas) generated in a converter are used in factories and power generation facilities. In addition, mixed gas (M gas) obtained by mixing these by-product gases and adjusting the amount of heat is also used in factories and power generation facilities.

Here, in a case where the gas supply amount is insufficient for the factory demand (e.g., demand amount in heating furnace of rolling mill), city gas is supplemented to satisfy the factory demand. In addition, in a case where the gas supply amount to the power generation facility is insufficient compared to a predetermined amount, the gas supply is supplemented with heavy oil. The cost of these supplementary fuels varies depending on the amount used. On the other hand, in a case where the gas supply amount is in surplus compared to the factory demand, the gas is neutralized by combustion and then released into the atmosphere, but this leads to energy loss and carbon dioxide emission, and thus should be minimized. In order to reduce cost and control emission, it is necessary to use a gas holder which is a storage facility for by-product gas and appropriately adjust the gas distribution amount.

For example, in the gas holder, when the supply amount of by-product gas is larger than the demand amount, by storing the by-product gas in the gas holder in preference to the emission, the storage amount (gas holder level) is increased to control the emission. On the other hand, when the demand amount of by-product gas is larger than the supply amount, the storage gas is discharged from the gas holder to satisfy the demand and reduce the amount of supplementary fuel used. In addition, in a case where the demand amount of by-product gas is even larger than the supply amount, the output of the power generation facility is reduced. In addition, in a case where it is still not possible to deal with the problem, the operation level of the factory may be lowered.

Steam is supplied by an LD gas and sintering furnace exhaust heat recovery boiler, a coke drying quenching (CDQ) boiler, and extraction steam from a turbine middle stage of a power generation facility (operation of obtaining steam from turbine middle stage. Power generation amount is reduced). Moreover, steam is used in factories (pickling tank heating in cold rolling plants and vacuum degassing equipment). The shortage amount of the steam demand is purchased from the outside. In addition, the power demand of the factory is satisfied by the amount of power generation in CDQ, top-pressure recovery turbine (TRT), and power generation facilities, and purchase of electricity from the power company.

The electricity purchase amount needs to be managed so as not to exceed the contract amount per hour (upper limit of amount of electricity purchased). In addition, since the electricity purchase unit price varies depending on the time period, the operation condition that minimizes the cost varies depending on the time period and the supply and demand situation. For example, when the unit price is high and there is a surplus in the by-product gas supply amount, the output of the power generation facility is set to be high to reduce the electricity purchase amount. In view of such a background, techniques for optimizing the energy operation cost of a steel mill have been proposed.

For example, in Patent Literature 1, the following method is used in order to obtain the optimum energy operation condition of the steel mill. That is, in Patent Literature 1, actual and predicted values of the amount of energy utilities generated and consumed by each factory within a steel mill are used. Then, in Patent Literature 1, by using these values, the operation conditions of the energy facilities in the steel mill are calculated such that the value of an evaluation function, which is based on the total energy operation cost of the steel mill within a predetermined time from the current time, is minimized.

Citation List

Patent Literature

Patent Literature 1: JP 7028272 B2

Summary

Technical Problem

However, the method proposed in Patent Literature 1 only calculates the operation condition of the energy facility in which the total energy operation cost of the steel mill is evaluated, and there is a problem that the $CO_2$ emission amount in the energy operation is not evaluated. As a result, it is not possible to compare the cost in the $CO_2$ emission transaction with the $CO_2$ emission cost in the energy operation in the steel mill, and thus there is a problem that it is not possible to achieve optimization of the operation in consideration of the $CO_2$ emission cost.

The present invention has been made in view of the above, and an object of the present invention is to provide an energy operation support system, an information processing device, a display terminal device, an energy operation support method, and a steel mill operation method capable of achieving optimization of operation in consideration of $CO_2$ emission cost.

Solution to Problem

To solve the above-described problem and achieve the object, an energy operation support system of a steel mill according to the present invention includes: an information processing device; and a display terminal device, wherein the information processing device includes: an information acquisition unit configured to acquire information regarding energy utilities for each factory within the steel mill and information regarding an operational plan of an energy facility in the steel mill; an optimization unit configured to calculate an operation condition of the energy facility; and an output unit configured to output information calculated by the optimization unit, the information including the operation condition of the energy facility, the optimization unit includes: a cost optimization unit configured to calculate the operation condition of the energy facility based on an evaluation of a total energy operation cost of the steel mill, a $CO_2$ optimization unit configured to calculate the operation condition of the energy facility based on an evaluation of a total energy operation $CO_2$ emission amount of the steel mill; and a $CO_2$ cost evaluation unit configured to calculate a $CO_2$ cost index in energy operation of the steel mill based on the total energy operation cost of the steel mill calculated by the cost optimization unit and the total energy operation $CO_2$ emission amount calculated by the $CO_2$ optimization unit, and the display terminal device includes: an information acquisition unit configured to acquire at least the total energy operation cost, the total energy operation $CO_2$ emission amount, and the $CO_2$ cost index from the information processing device; and an information display unit configured to display energy operation information of the steel mill including the total energy operation cost, the total energy operation $CO_2$ emission amount, and the $CO_2$ cost index.

Moreover, in the above-described energy operation support system according to the present invention, the cost optimization unit is configured to calculate a total energy operation cost based on the evaluation of the total energy operation cost and a total energy operation $CO_2$ emission amount based on the evaluation of the total energy operation cost, the $CO_2$ optimization unit is configured to calculate a total energy operation cost based on the evaluation of the total energy operation $CO_2$ emission amount and a total energy operation $CO_2$ emission amount based on the evaluation of the total energy operation $CO_2$ emission amount, and the $CO_2$ cost evaluation unit is configured to calculate a unit cost of total energy operation $CO_2$ emission, that is the $CO_2$ cost index, based on a ratio of a difference between the total energy operation costs and a difference between the total energy operation $CO_2$ emission amounts, and determine whether or not the unit cost of total energy operation $CO_2$ emission is equal to or more than a contract value given in advance.

Moreover, in the above-described energy operation support system according to the present invention, the $CO_2$ optimization unit is configured to calculate a total energy operation cost based on the evaluation of the total energy operation $CO_2$ emission amount and a total energy operation $CO_2$ emission amount based on the evaluation of the total energy operation $CO_2$ emission amount such that the unit cost of total energy operation $CO_2$ emission is equal to or less than the contract value.

Moreover, in the above-described energy operation support system according to the present invention, the energy utilities include gas, steam, and electricity.

Moreover, in the above-described energy operation support system according to the present invention, the energy facility includes a mixed gas production facility, a gas holder, a top pressure recovery turbine system, and a power generation facility using by-product gas, heavy oil, or extraction steam.

Moreover, in the above-described energy operation support system according to the present invention, the information regarding an operational plan of the energy facility includes a setting value of the energy facility and a contract value of a transaction contract, and the transaction contract includes a purchase contract associated with use of heavy oil, city gas, and steam, a purchase contract associated with purchase of electricity, and a transaction contract when trading $CO_2$ emissions.

Moreover, in the above-described energy operation support system according to the present invention, the total energy operation cost includes a cost associated with use of heavy oil, city gas, and steam, and a cost associated with purchase of electricity.

Moreover, in the above-described energy operation support system according to the present invention, the total

energy operation $CO_2$ emission amount includes a $CO_2$ emission amount associated with use of heavy oil, city gas, and steam, a $CO_2$ emission amount associated with purchase of electricity, and a $CO_2$ emission amount associated with use of blast furnace gas, coke gas, and steelmaking gas generated as by-product gas in a steel mill.

To solve the above-described problem and achieve the object, an information processing device according to the present invention constitutes an energy operation support system in a steel mill together with a display terminal device, and includes: an information acquisition unit configured to acquire information regarding energy utilities for each factory within a steel mill and information regarding an operational plan of an energy facility in the steel mill; an optimization unit configured to calculate an operation condition of the energy facility; and an output unit configured to output information calculated by the optimization unit, the information including an operation condition of the energy facility, wherein the optimization unit includes a cost optimization unit configured to calculate the operation condition of the energy facility based on an evaluation of a total energy operation cost of the steel mill, a $CO_2$ optimization unit configured to calculate the operation condition of the energy facility based on an evaluation of a total energy operation $CO_2$ emission amount of the steel mill, and a $CO_2$ cost evaluation unit configured to calculate a $CO_2$ cost index in energy operation of the steel mill based on the total energy operation cost of the steel mill calculated by the cost optimization unit and the total energy operation $CO_2$ emission amount calculated by the $CO_2$ optimization unit.

To solve the above-described problem and achieve the object, a display terminal device according to the present invention constitutes an energy operation support system in a steel mill together with an information processing device, and the display terminal device is configured to acquire: an operation condition of an energy facility and a total energy operation cost calculated by a cost optimization unit of the information processing device based on an evaluation of the total energy operation cost of the steel mill; an operation condition of the energy facility and a total energy operation $CO_2$ emission amount calculated by a $CO_2$ optimization unit of the information processing device based on an evaluation of the total energy operation $CO_2$ emission amount of the steel mill; and a $CO_2$ cost index calculated by a $CO_2$ cost evaluation unit of the information processing device, and display energy operation information of the steel mill, the information including the total energy operation cost, the total energy operation $CO_2$ emission amount, and the $CO_2$ cost index.

To solve the above-described problem and achieve the object, an energy operation support method of a steel mill according to the present invention includes: an information acquisition step of acquiring, by an information acquisition unit of an information processing device, information regarding energy utilities for each factory within the steel mill and information regarding an operational plan of an energy facility in the steel mill; an optimization step of calculating, by an optimization unit of the information processing device, an operation condition of the energy facility; an output step of outputting, by an output unit of the information processing device, the information calculated in the optimization step, the information including an operation condition of the energy facility; and an information display step by the display terminal device, wherein the optimization step includes a cost optimization step of calculating an operation condition of the energy facility based on an evaluation of a total energy operation cost of the steel mill, a $CO_2$ optimization step of calculating an operation condition of the energy facility based on an evaluation of a total energy operation $CO_2$ emission amount of the steel mill, and a $CO_2$ cost evaluation step of calculating a $CO_2$ cost index in energy operation of the steel mill based on the total energy operation cost of the steel mill calculated in the cost optimization step and the total energy operation $CO_2$ emission amount calculated in the $CO_2$ optimization step, and the information display step displays energy operation information of the steel mill including the total energy operation cost, the total energy operation $CO_2$ emission amount, and the $CO_2$ cost index.

To solve the above-described problem and achieve the object, a steel mill operation method according to the present invention includes changing an operation condition of the steel mill based on energy operation information of the steel mill displayed by a display terminal device of the above-described energy operation support system. Advantageous Effects of Invention

In an energy operation support system, an information processing device, a display terminal device, an energy operation support method, and a steel mill operation method according to the present invention, cost optimization and $CO_2$ emission optimization are performed in optimization calculation processing. This makes it possible to calculate the total energy operation costs and the total energy operation $CO_2$ emission amounts, and evaluate the difference between the total energy operation costs and the difference between the total energy operation $CO_2$ emission amounts. As a result, it is possible to achieve optimization of operation in consideration of $CO_2$ emission cost.

Brief Description of Drawings

FIG. 1 is a diagram illustrating a schematic configuration of an energy operation support system according to an embodiment of the present invention.
FIG. 2 is a diagram illustrating a schematic configuration of an information processing device according to the embodiment of the present invention.

FIG. 3 is a flowchart illustrating a flow of an energy operation support method executed by the energy operation support system according to the embodiment of the present invention.

FIG. 4 is an example of the present invention, and is a diagram illustrating transition of a unit cost of total energy operation $CO_2$ emission when optimization calculation is performed without providing a constraint condition that the unit cost of total energy operation $CO_2$ emission becomes equal to or less than a contract value.

FIG. 5 is an example of the present invention, and is a diagram illustrating transition of the unit cost of total energy operation $CO_2$ emission when optimization calculation is performed by providing a constraint condition that the unit cost of total energy operation $CO_2$ emission becomes equal to or less than the contract value.

Description of Embodiments

An energy operation support system, an information processing device, a display terminal device, an energy operation support method, and a steel mill operation method according to an embodiment of the present invention will be described with reference to the drawings. Note that the constituent elements in the following embodiment include those that can be easily replaced by those skilled in the art or those that are substantially the same.

(Energy operation support system)

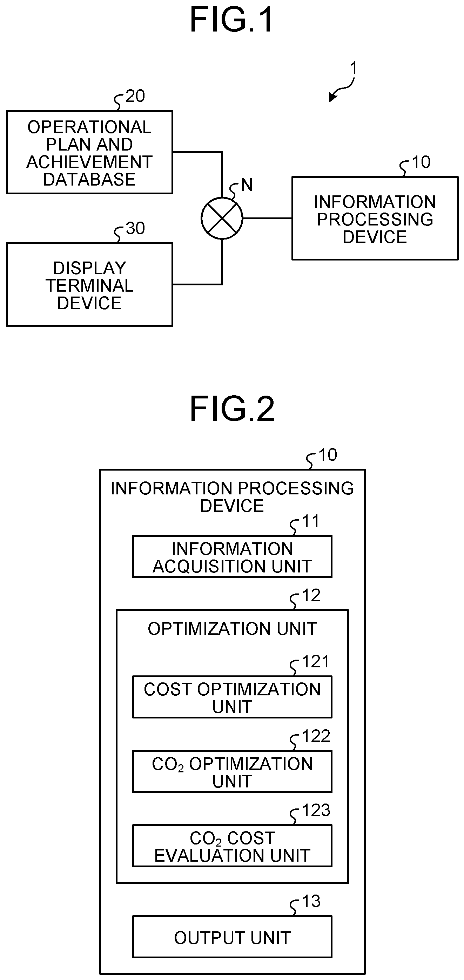

An energy operation support system according to the embodiment will be described with reference to FIGS. 1 and 2. The energy operation support system is, for example, a system used in a steel mill, and calculates an optimal energy operation condition in the steel mill. As illustrated in FIG. 1, an energy operation support system 1 includes an information processing device 10, an operational plan and achievement database 20, and a display terminal device 30.

The information processing device 10, the operational plan and achievement database 20, and the display terminal device 30 are communicable through a network N such as an Internet line network, for example. In the energy operation support system, the display terminal device 30 is disposed in, for example, a steel mill.

(Information processing device)

The information processing device 10 is implemented by, for example, a general-purpose computer such as a workstation or a personal computer, a server arranged on a cloud, or the like. Furthermore, the information processing device 10 may include information input means such as a keyboard, a mouse pointer, and a numeric keypad, for example.

The information processing device 10 includes, for example, a processor (arithmetic processing device) including a central processing unit (CPU) and the like, and a memory (main storage unit) including a random access memory (RAM), a read only memory (ROM), and the like. Then, in the information processing device 10, the processor executes a computer program to control each component and the like, thereby implementing a function matching a predetermined purpose. The information processing device 10 functions as an information acquisition unit 11, an optimization unit 12, and an output unit 13 through execution of the computer program described above.

Furthermore, the information processing device 10 may include a storage unit that stores various processing results and the like. The storage unit includes a recording medium such as an erasable programmable ROM (EPROM), a hard disk drive (HDD), a solid state drive (SSD), and a removable medium. Examples of the removable medium include a universal serial bus (USB) memory and a disc recording medium such as a compact disc (CD), a digital versatile disc (DVD), and a Blu-ray (registered trademark) disc (BD).

The information acquisition unit 11 acquires, from the operational plan and achievement database 20, information regarding energy utilities for each factory within a steel mill and information regarding operation plans of energy facilities in the steel mill.

Here, examples of "information regarding energy utilities" include actual and predicted values of the amount of energy utilities generated, and actual and predicted values of the amount of energy utilities consumed, and the like. Additionally, "energy utilities" include, for example, gas, steam, electricity, and the like. In addition, examples of "information regarding operation plans of energy facilities" include a setting value of the energy facility, a contract value of a transaction contract, and the like. In addition, "energy facilities" include, for example, a mixed gas production facility, a gas holder, a top pressure recovery turbine system, and a power generation facility using by-product gas, heavy oil, or extraction steam. In addition, "transaction contract" includes, for example, a purchase contract associated with the use of heavy oil, city gas, and steam, a purchase contract associated with purchase of electricity, a transaction contract when trading $CO_2$ emissions, and the like.

The optimization unit 12 calculates operation condition of energy facilities in the steel mill. The optimization unit 12 calculates, for example, an operation condition of the energy facility within a predetermined time from the current time. Additionally, as illustrated in FIG. 2, the optimization unit 12 includes a cost optimization unit 121, a $CO_2$ optimization unit 122, and a $CO_2$ cost evaluation unit 123.

The cost optimization unit 121 calculates an operation condition of the energy facility based on the evaluation of the total energy operation cost of the steel mill. For example, the cost optimization unit 121 uses the total energy operation cost of the steel mill within a predetermined time from the current time as an evaluation function, and calculates the operation condition of the energy facility in the steel mill such the value of the evaluation function becomes small.

In addition, as described later, the cost optimization unit 121 calculates a total energy operation cost ("total_cost$_{costmin}$(k)" in Table 6 described later) based on the evaluation of the total energy operation cost (i.e., total energy operation cost is used as evaluation function). In addition, as described later, the cost optimization unit 121 calculates a total energy operation $CO_2$ emission amount ("total_CO2$_{costmin}$(k)" in Table 6 described later) based on the evaluation of the total energy operation cost.

Here, "total energy operation cost" includes, for example, costs associated with use of heavy oil, city gas, and steam, and costs associated with purchase of electricity. In addition, "total energy operation $CO_2$ emission amount" includes, for example, a $CO_2$ emission amount associated with the use of heavy oil, city gas, and steam, a $CO_2$ emission amount associated with the purchase of electricity, and a $CO_2$ emission amount associated with the use of blast furnace gas, coke gas, and steelmaking gas generated as by-product gas in a steel mill.

The $CO_2$ optimization unit 122 calculates the operation condition of the energy facility based on the evaluation of the total energy operation $CO_2$ emission amount of the steel mill. For example, the $CO_2$ optimization unit 122 uses the total energy operation $CO_2$ emission amount of the steel mill within a predetermined time from the current time as an evaluation function, and calculates the operation condition of the energy facility in the steel mill such that the value of the evaluation function becomes small.

In addition, as described later, the $CO_2$ optimization unit 122 calculates a total energy operation cost ("total_cost$_{co2min}$(k)" in Table 6 described later) based on the evaluation of the total energy operation $CO_2$ emission amount (i.e., total energy operation $CO_2$ emission amount is used as evaluation function). In addition, as described later, the $CO_2$ optimization unit 122 calculates a total energy operation $CO_2$ emission amount ("total_CO2$_{CO2min}$(k)" in Table 6 described later) based on the evaluation of the total energy operation $CO_2$ emission amount.

In addition, the $CO_2$ optimization unit 122 calculates a total energy operation cost (total_cost$_{co2min}$(k)) based on the evaluation of the total energy operation $CO_2$ emission amount and a total energy operation $CO_2$ emission amount (total_CO2$_{CO2min}$(k)) based on the evaluation of the total energy operation $CO_2$ emission amount. In addition, the $CO_2$ optimization unit 122 calculates the total energy operation cost and the total energy operation $CO_2$ emission amount such that a $CO_2$ cost index "unit cost of total energy operation $CO_2$ emission " calculated by the $CO_2$ cost evaluation unit 123 becomes equal to or less than a predetermined contract value.

The $CO_2$ cost evaluation unit 123 calculates a $CO_2$ cost index in the energy operation of the steel mill based on the total energy operation cost of the steel mill calculated by the cost optimization unit 121 and the total energy operation $CO_2$ emission amount calculated by the $CO_2$ optimization unit 122. Specifically, the $CO_2$ cost evaluation unit 123 calculates a unit cost of total energy operation $CO_2$ emission which is a $CO_2$ cost index. The unit cost of total energy operation $CO_2$ emission is calculated from the ratio of the difference between each total energy operation cost (total_cost$_{costmin}$(k), total_cost$_{co2min}$(k)) and the difference between each total energy operation $CO_2$ emission amount (total_CO2$_{costmin}$(k), total_CO2$_{C02min}$(k)). In addition, each total energy operation cost (total_cost$_{costmin}$(k), total_cost$_{co2min}$(k)) and each total energy operation $CO_2$ emission amount (total_CO2$_{costmin}$(k), total_CO2$_{CO2min}$(k)) are calculated by the cost optimization unit 121 and the $CO_2$ optimization unit 122. Then, the $CO_2$ cost evaluation unit 123 determines whether or not the unit cost of total energy operation $CO_2$ emission is equal to or more than a contract value given in advance.

Here, the "unit cost of total energy operation $CO_2$ emission" refers to a cost per unit $CO_2$ emission amount, and specifically refers to a cost required to reduce the $CO_2$ emission amount by one ton.

The output unit 13 transmits various types of information to other terminal devices and other information processing devices via the network N. Examples of the information transmitted by the output unit 13 include the operation condition of the energy facility calculated by the cost optimization unit 121 and the $CO_2$ optimization unit 122, and the $CO_2$ cost index calculated by the $CO_2$ cost evaluation unit 123. In addition, examples of the information transmitted by the output unit 13 include a determination result by the $CO_2$ cost evaluation unit 123 as to whether or not the unit cost of total energy operation $CO_2$ emission is equal to or more than the contract value. In addition, another information processing device to which the output unit 13 transmits various types of information may include a control computer for each energy facility. The control computer may control each energy facility according to a transmitted operation condition of the energy facility. In addition, the control computer may control each energy facility by receiving correction by an operator.

Furthermore, the output unit 13 may display the various types of information via a display device (e.g., liquid crystal display (LCD), organic electroluminescence (EL) display (OLED), touch panel display, or the like) (not illustrated) connected to the information processing device 10. Furthermore, the output unit 13 may display a tuning screen or the like at the time of various calculations in the optimization unit 12. In addition, the output unit 13 may be configured by a display device to display the various types of information, a tuning screen, and the like.

(Operational plan and achievement database)

The operational plan and achievement database 20 is stored in a storage device including a recording medium such as an erasable programmable ROM (EPROM), a hard disk drive (HDD), and a removable medium.

The operational plan and achievement database 20 stores information regarding an operational plan of a steel mill (hereinafter referred to as "operational plan information") and information regarding an operational achievement (hereinafter referred to as "operational achievement information"). The operational plan information and the operational achievement information are accumulated by, for example, an operational plan device and an operational achievement device (not illustrated), then aggregated by an aggregation device (not illustrated), and stored in the operational plan and achievement database 20. Furthermore, the operational plan and achievement database 20 may be configured by a database server provided on the network N.

(Display terminal device)

The display terminal device 30 acquires and displays various types of information from the information processing device 10. The display terminal device 30 is implemented by, for example, a personal computer or the like connected to the information processing device 10 via the network N. In addition, the display terminal device 30 has, for example, a function of an information acquisition unit and a function of an information display unit.

The information acquisition unit acquires, from the information processing device 10, for example, an operation condition of an energy facility and the total energy operation cost calculated by the cost optimization unit 121 based on the evaluation of the total energy operation cost of the steel mill. In addition, the information acquisition unit acquires an operation condition of an energy facility and the total energy operation $CO_2$ emission amount calculated by the $CO_2$ optimization unit 122 based on the evaluation of the total energy operation $CO_2$ emission amount of the steel mill, and a $CO_2$ cost index calculated by the $CO_2$ cost evaluation unit 123. In addition, the information display unit displays energy operation information of the steel mill including the total energy operation cost, the total energy operation $CO_2$ emission amount, and the $CO_2$ cost index via a display device (not illustrated) connected to the display terminal device 30.

In addition, the display terminal device 30 may be configured by a display device and display energy operation information acquired from the information processing device 10 via the network N.

(Steel mill operation method)

In a steel mill operation method according to the embodiment, based on the energy operation information of the steel mill including the total energy operation cost, the total energy operation $CO_2$ emission amount, and the $CO_2$ cost index displayed by the display terminal device 30, operation is performed while changing the operation condition of the steel mill such as storage and payment of the gas holder and purchase of external fuel (city gas and heavy oil) and electricity. At this time, the operation condition change amount may be instructed via the display terminal device 30.

(Energy operation support method)

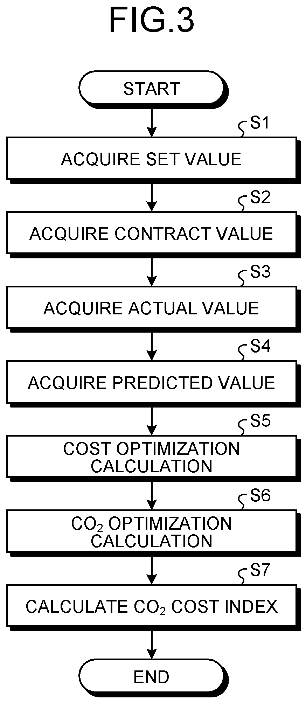

An energy operation support method executed by the energy operation support system according to the embodiment will be described with reference to FIG. 3. As illustrated in FIG. 3, the energy operation support method includes an information acquisition step (Steps S1 to S4), a cost optimization step (Step S5), a $CO_2$ optimization step (Step S6), and a $CO_2$ cost evaluation step (Step S7).

The flowchart illustrated in FIG. 3 starts at a timing when an execution command of optimization calculation processing is input to the information processing device 10, and the optimization calculation processing proceeds to the processing of Step S1. Steps S1 to S4 may be performed in a different order, or may be performed at the same timing.

<Step S1>

In the processing of Step S1, the information acquisition unit 11 acquires data of a set value of an energy facility in the steel mill as input data of the optimization calculation processing. Specifically, the information acquisition unit 11 acquires the following data as illustrated in Table 1 below. Note that in Table 1 below, "x" represents the number of generators. As a result, the processing of Step S1 is completed, and the optimization calculation process proceeds to the processing of Step S2.

Upper limit of power generation amount (x = 1U to NU) $UB_{POW}$ x
Lower limit of power generation amount (x = 1U to NU) $LB_{POW}$ x
Upper limit of power generation change amount (x = 1U to NU) $UB_{POWDIF\ X}$

Lower limit of power generation change amount (x = 1U to NU) $LB_{POWDIF\ X}$
Upper limit of B gas holder (storage amount) $UB_{B\ LEVEL}$
Lower limit of B gas holder (storage amount) $LB_{B\ LEVEL}$
Upper limit of B gas holder (suction amount and discharge amount) $UB_{B\ INOUT}$
Lower limit of B gas holder (suction amount and discharge amount) $LB_{B\ INOUT}$
Upper limit of C gas holder (storage amount) $UB_{C\ LEVEL}$
Lower limit of C gas holder (storage amount) $LB_{C\ LEVEL}$
Upper limit of C gas holder (suction amount and discharge amount) $UB_{C\ INOUT}$
Lower limit of C gas holder (suction amount and discharge amount) $LB_{C\ INOUT}$
Upper limit of LD gas holder (storage amount) $UB_{LD\ LEVEL}$
Lower limit of LD gas holder (storage amount) $LB_{LD\ LEVEL}$
Upper limit of LD gas holder (suction amount and discharge amount) $UB_{LD\ INOUT}$
Lower limit of LD gas holder (suction amount and discharge amount) $LB_{LD\ INOUT}$

Table 1

| Item | Set value | Unit |
|---|---|---|
| Upper limit of power generation amount (x = 1U to NU) | $UB_{POW\ x}$ | MW |
| Lower limit of power generation amount (x = 1U to NU) | $LB_{POW\ x}$ | MW |
| Upper limit of power generation change amount (x = 1U to NU) | $UB_{POWDIF\ x}$ | MW |
| Lower limit of power generation change amount (x = 1U to NU) | $LB_{POWDIF\ x}$ | MW |
| Upper limit of B gas holder (storage amount) | $UB_{B\ LEVEL}$ | GJ |
| Lower limit of B gas holder (storage amount) | $LB_{B\ LEVEL}$ | GJ |
| Upper limit of B gas holder (suction amount and discharge amount) | $UB_{B\ INOUT}$ | GJ/h |
| Lower limit of B gas holder (suction amount and discharge amount) | $LB_{B\ INOUT}$ | GJ/h |
| Upper limit of C gas holder (storage amount) | $UB_{C\ LEVEL}$ | GJ |
| Lower limit of C gas holder (storage amount) | $LB_{C\ LEVEL}$ | GJ |
| Upper limit of C gas holder (suction amount and discharge amount) | $UB_{C\ INOUT}$ | GJ/h |
| Lower limit of C gas holder (suction amount and discharge amount) | $LB_{C\ INOUT}$ | GJ/h |
| Upper limit of LD gas holder (storage amount) | $UB_{LD\ LEVEL}$ | GJ |
| Lower limit of LD gas holder (storage amount) | $LB_{LD\ LEVEL}$ | GJ |
| Upper limit of LD gas holder (suction amount and discharge amount) | $UB_{LD\ INOUT}$ | GJ/h |
| Lower limit of LD gas holder (suction amount and discharge amount) | $LB_{LD\ INOUT}$ | GJ/h |

<Step S2>

In the processing of Step S2, the information acquisition unit 11 acquires, as input data of the optimization calculation processing, data of a contract value necessary for calculating the cost for energy operation in the steel mill. Specifically, the information acquisition unit 11 acquires the following data as illustrated in Table 2 below. Note that in Table 2 below, k = 0 represents the present time, and k = 1 to N represent future times. Furthermore, "N" is the final period of the optimization calculation, and for example, in a case where N = 24 and one period is five minutes, it represents two hours into the future. As a result, the processing of Step S2 is completed, and the optimization calculation processing proceeds to the processing of Step S3.

Power purchase unit price $P_{ELE}(k)$
Steam purchase unit price $P_{ST}(k)$
Heavy oil purchase unit price $P_{OIL}(k)$
City gas purchase unit price $P_{TOG}(k)$
Electric power $CO_2$ emission coefficient $CO2_{ELE}(k)$
Steam $CO_2$ emission coefficient $CO2_{ST}(k)$

8

Heavy oil $CO_2$ emission coefficient $CO2_{OIL}(k)$
City gas $CO_2$ emission coefficient $CO2_{TOG}(k)$
B gas $CO_2$ emission coefficient $CO2_B(k)$
C gas $CO_2$ emission coefficient $CO2_C(k)$
LD gas $CO_2$ emission coefficient $CO2_{LD}(k)$
$CO_2$ transaction price $P_{CO2}(k)$

Table 2

| Item | Contract value (k = 0 to N) | Unit |
|---|---|---|
| Power purchase unit price | $P_{ELE}(k)$ | Yen/MWh |
| Steam purchase unit price | $P_{ST}(k)$ | Yen/ton |
| Heavy oil purchase unit price | $P_{OIL}(k)$ | Yen/GJ |
| City gas purchase unit price | $P_{TOG}(k)$ | Yen/GJ |
| Electric power $CO_2$ emission coefficient | $CO2_{ELE}(k)$ | ton/MWh |
| Steam $CO_2$ emission coefficient | $CO2_{ST}(k)$ | ton/ton |
| Heavy oil $CO_2$ emission coefficient | $CO2_{OIL}(k)$ | ton/GJ |
| City gas $CO_2$ emission coefficient | $CO2_{TOG}(k)$ | ton/GJ |
| B gas $CO_2$ emission coefficient | $CO2_B(k)$ | ton/GJ |
| C gas $CO_2$ emission coefficient | $CO2_C(k)$ | ton/GJ |
| LD gas $CO_2$ emission coefficient | $CO2_{LD}(k)$ | ton/GJ |
| $CO_2$ transaction price | $P_{CO2}(k)$ | Yen/ton |

<Step S3>

In the processing of Step S3, the information acquisition unit 11 acquires data of the actual value of energy utilities of the factory in the steel mill at the current time (k = 0) as input data of the optimization calculation processing. Specifically, as illustrated in the following Table 3 (second column), the information acquisition unit 11 acquires the following data as the data of the actual value of energy utilities at the current time (k = 0).

B gas generation amount (factory total) $S_B(0)$

C gas generation amount (factory total) $S_C(0)$

LD gas generation amount (factory total) $S_{LD}(0)$

Steam generation amount (factory total) $S_{ST}(0)$

TRT power generation amount (all turbines) $S_{TRTELE}(0)$

B gas usage (factory total) $D_B(0)$

C gas usage (factory total) $D_C(0)$

LD gas usage (factory total) $D_{LD}(0)$

M gas usage (factory total) $D_{M\ PLANT}(0)$

Steam usage (factory total) $D_{ST}(0)$

Power usage (factory total) $D_{ELE}(0)$

9

Table 3

| Item | Actual value (k = 0) | Predicted value (k = 1 to N) | Unit |
|---|---|---|---|
| B gas generation amount (factory total) | $S_B(0)$ | $S_B(k)$ | GJ/h |
| C gas generation amount (factory total) | $S_C(0)$ | $S_C(k)$ | GJ/h |
| LD gas generation amount (factory total) | $S_{LD}(0)$ | $S_{LD}(k)$ | GJ/h |
| Steam generation amount (factory total) | $S_{ST}(0)$ | $S_{ST}(k)$ | ton/h |
| TRT power generation amount (all turbines) | $S_{TRTELE}(0)$ | $S_{TRTELE}(k)$ | MW |
| B gas usage (factory total) | $D_B(0)$ | $D_B(k)$ | GJ/h |
| C gas usage (factory total) | $D_C(0)$ | $D_C(k)$ | GJ/h |
| LD gas usage (factory total) | $D_{LD}(0)$ | $D_{LD}(k)$ | GJ/h |
| M gas usage (factory total) | $D_{M\,PLANT}(0)$ | $D_{M\,PLANT}(k)$ | GJ/h |
| Steam usage (factory total) | $D_{ST}(0)$ | $D_{ST}(k)$ | ton/h |
| Electricity usage (factory total) | $D_{ELE}(0)$ | $D_{ELE}(k)$ | MW |

In addition, as illustrated in the following Table 4 (second column) and Table 5 (second column), the information acquisition unit 11 acquires the following data as the data of the actual value of energy utilities at the current time (k = 0). As a result, the processing of Step S3 is completed, and the optimization calculation processing proceeds to the processing of Step S4.

B gas usage (x = 1U to NU) $D_{B\,X}(0)$
C gas usage (x = 1U to NU) $D_{C\,X}(0)$
LD gas usage (x = 1U to NU) $D_{LD\,X}(0)$
M gas usage (x = 1U to NU) $D_{M\,X}(0)$
Heavy oil usage (x = 1U to NU) $D_{OIL\,X}(0)$
Extraction steam amount (x = 1U to NU) $S_{ST\,X}(0)$
City gas usage (power generation facility) $D_{TOG\,POW}(0)$
City gas usage (factory) $D_{TOG\,Mill}(0)$
B gas holder (storage amount) $H_{B\,LEVEL}(0)$
B gas holder (suction amount and discharge amount) $H_{B\,INOUT}(0)$
C gas holder (storage amount) $H_{C\,LEVEL}(0)$
C gas holder (suction amount and discharge amount) $H_{C\,INOUT}(0)$
LD gas holder (storage amount) $H_{LD\,LEVEL}(0)$
LD gas holder (suction amount and discharge amount) $H_{LD\,INOUT}(0)$
Power purchase amount $S_{ELE\,Purchase}(0)$
Steam purchase amount $S_{ST\,Purchase}(0)$
M gas for power generation facility (B gas) $D_{B\,POW}(0)$
M gas for power generation facility (C gas) $D_{C\,POW}(0)$
M gas for power generation facility (LD gas) $D_{LD\,POW}(0)$
M gas for power generation facility (city gas) $D_{TOG\,POW}(0)$
M gas for factory (B gas) $D_{B\,Mill}(0)$
M gas for factory (C gas) $D_{C\,Mill}(0)$
M gas for factory (LD gas) $D_{LD\,Mill}(0)$
M gas for factory (city gas) $D_{TOG\,Mill}(0)$
Total energy operation cost total_cost(0)
Total energy operation $CO_2$ emission amount total_CO2(0)

Table 4

| Item | Actual value (k = 0) | Decision variable (k = 1 to N) | Unit |
|---|---|---|---|
| B gas usage (x = 1U to NU) | $D_{B\,x}(0)$ | $D_{B\,x}(k)$ | GJ/h |

(continued)

| Item | Actual value (k = 0) | Decision variable (k = 1 to N) | Unit |
|---|---|---|---|
| C gas usage (x = 1U to NU) | $Dc_x(0)$ | $D_{Cx}(k)$ | GJ/h |
| LD gas usage (x = 1U to NU) | $D_{LDx}(0)$ | $D_{LDx}(k)$ | GJ/h |
| M gas usage (x = 1U to NU) | $D_{Mx}(0)$ | $D_{Mx}(k)$ | GJ/h |
| Heavy oil usage (x = 1U to NU) | $D_{OILx}(0)$ | $D_{OILx}(k)$ | GJ/h |
| Extraction steam amount (x = 1U to NU) | $S_{STx}(0)$ | $S_{STx}(k)$ | ton/h |
| City gas usage (power generation facility) | $D_{TOG\,POW}(0)$ | $D_{TOG\,POW}(k)$ | GJ/h |
| City gas usage (factory) | $D_{TOG\,Mill}(0)$ | $D_{TOG\,Mill}(k)$ | GJ/h |
| B gas holder (storage amount) | $H_{B\,LEVEL}(0)$ | $H_{B\,LEVEL}(k)$ | GJ |
| B gas holder (suction amount and discharge amount) | $H_{B\,INOUT}(0)$ | $H_{B\,INOUT}(k)$ | GJ/h |
| C gas holder (storage amount) | $H_{C\,LEVEL}(0)$ | $H_{C\,LEVEL}(k)$ | GJ |
| C gas holder (suction amount and discharge amount) | $H_{C\,INOUT}(0)$ | $H_{C\,INOUT}(k)$ | GJ/h |
| LD gas holder (storage amount) | $H_{LD\,LEVEL}(0)$ | $H_{LD\,LEVEL}(k)$ | GJ |
| LD gas holder (suction amount and discharge amount) | $H_{LD\,INOUT}(O)$ | $H_{LD\,INOUT}(k)$ | GJ/h |

Table 5

| Item | Actual value (k = 0) | Decision variable (k = 1 to N) | Unit |
|---|---|---|---|
| Power purchase amount | $S_{ELE\,Purchase}(0)$ | $S_{ELE\,Purchase}(k)$ | MW |
| Steam purchase amount | $S_{ST\,Purchase}(0)$ | $S_{ST\,Purchase}(k)$ | ton/h |
| M gas for power generation facility (B gas) | $D_{B\,POW}(0)$ | $D_{B\,POW}(k)$ | GJ/h |
| M gas for power generation facility (C gas) | $D_{C\,POW}(0)$ | $D_{C\,POW}(k)$ | GJ/h |
| M gas for power generation facility (LD gas) | $D_{LD\,POW}(0)$ | $D_{LD\,POW}(k)$ | GJ/h |
| M gas for power generation facility (city gas) | $D_{TOG\,POW}(0)$ | $D_{TOG\,POW}(k)$ | GJ/h |
| M gas for factory (B gas) | $D_{B\,Mill}(0)$ | $D_{B\,Mill}(k)$ | GJ/h |
| M gas for factory (C gas) | $Dc_{Mill}(0)$ | $Dc_{Mill}(k)$ | GJ/h |
| M gas for factory (LD gas) | $D_{LD\,Mill}(0)$ | $D_{LD\,Mill}(k)$ | GJ/h |
| M gas for factory (city gas) | $D_{TOG\,Mill}(0)$ | $D_{TOG\,Mill}(k)$ | GJ/h |
| Total energy operation cost | total_cost(0) | total_cost(k) | Yen/h |
| Total energy operation $CO_2$ emission amount | total_CO2(0) | total_CO2(k) | ton/h |

<Step S4>

In the processing of Step S4, the information acquisition unit 11 acquires data of a predicted value of energy utilities of the factory in the steel mill in the future (k = 1 to N) as input data of the optimization calculation processing. Specifically, as illustrated in the above Table 3 (third column), the information acquisition unit 11 acquires the following data as data of the predicted value of energy utilities in the future (k = 1 to N). As a result, the processing of Step S4 is completed, and the optimization calculation processing proceeds to the processing of Step S5.

B gas generation amount (factory total) $S_B(k)$
C gas generation amount (factory total) $S_C(k)$
LD gas generation amount (factory total) $S_{LD}(k)$
Steam generation amount (factory total) $S_{ST}(k)$
TRT power generation amount (all turbines) $S_{TRTELE}(k)$
B gas usage (factory total) $D_B(k)$

C gas usage (factory total) $D_C(k)$
LD gas usage (factory total) $D_{LD}(k)$
M gas usage (factory total) $D_{M\,PLANT}(k)$
Steam usage (factory total) $D_{ST}(k)$
Power usage (factory total) $D_{ELE}(k)$

<Step S5>

In the processing of Step S5, the cost optimization unit 121 executes optimization calculation to determine the condition that minimize the total energy operation cost total_cost(k) for energy operation in the steel mill within a future predetermined period (k = 1 to N) using the data acquired in the processing of Steps S1 to S4.
The decision variables (variables searched to minimize cost) in the optimization calculation in Step S5 are as follows as illustrated in Table 4 (third column) and Table 5 (third column) above.

B gas usage (x = 1U to NU) $D_{B\,x}(k)$
C gas usage (x = 1U to NU) $D_{C\,x}(k)$
LD gas usage (x = 1U to NU) $D_{LD\,x}(k)$
M gas usage (x = 1U to NU) $D_{M\,X}(k)$
Heavy oil usage (x = 1U to NU) $D_{OIL\,X}(k)$
Extraction steam amount (x = 1U to NU) $S_{ST\,x}(k)$
City gas usage (power generation facility) $D_{TOG\,POM}(k)$
City gas usage (factory) $D_{TOG\,Mill}(k)$
B gas holder (storage amount) $H_{B\,LEVEL}(k)$
B gas holder (suction amount and discharge amount) $H_{B\,INOUT}(k)$
C gas holder (storage amount) $H_{C\,LEVEL}(k)$
C gas holder (suction amount and discharge amount) $H_{C\,INOUT}(k)$
LD gas holder (storage amount) $H_{LD\,LEVEL}(k)$
LD gas holder (suction amount and discharge amount) $H_{LD\,INOUT}(k)$
Power purchase amount $S_{ELE\,Purchase}(k)$
Steam purchase amount $S_{ST\,Purchase}(k)$
M gas for power generation facility (B gas) $D_{B\,POW}(k)$
M gas for power generation facility (C gas) $D_{C\,POW}(k)$
M gas for power generation facility (LD gas) $D_{LD\,POW}(k)$
M gas for power generation facility (city gas) $D_{TOG\,POW}(k)$
M gas for factory (B gas) $D_{B\,Mill}(k)$
M gas for factory (C gas) $D_{C\,Mill}(k)$
M gas for factory (LD gas) $D_{LD\,Mill}(k)$
M gas for factory (city gas) $D_{TOG\,Mill}(k)$
Total energy operation cost total_cost(k)
Total energy operation $CO_2$ emission amount total_CO2(k)

In addition, in Step S5, constraint conditions as shown in the following formulas (1) to (15) are set at the time of optimization calculation. Note that "T" in the following formulas (6) and (11) represents a time conversion factor of one period, and for example, in a case where one period is five minutes, T = 5/60 (h).

$$S_B(k) = \underbrace{D_B(k) + D_{B\,Pow}(k) + D_{B\,Mill}(k)}_{\text{For M gas}} + \underbrace{\sum_{j=1U}^{NU} D_{B\,j}(k)}_{\substack{\text{For power} \\ \text{generation} \\ \text{facility}}} + \underbrace{H_{B\,INOUT}(k)}_{\substack{\text{Gas holder} \\ \text{suction} \\ \text{amount}}} \quad \cdots (1)$$

$$S_C(k) = D_C(k) + D_{C\,Pow}(k) + D_{C\,Mill}(k) + \underbrace{\sum_{j=1U}^{NU} D_{C\,j}(k)}_{} + \underbrace{H_{C\,INOUT}(k)}_{} \quad \cdots (2)$$

|For M gas|For power generation facility|Gas holder suction amount|

$$S_{LD}(k) = D_{LD}(k) + D_{LD\,Pow}(k) + D_{LD\,Mill}(k) + \sum_{j=1U}^{NU} D_{LD\,j}(k) + H_{LD\,INOUT}(k) \quad \cdots (3)$$

For M gas — For power generation facility — Gas holder suction amount

$$D_{M\,PLANT}(k) = D_{B\,Mill}(k) + D_{C\,Mill}(k) + D_{LD\,Mill}(k) + D_{TOG\,Mill}(k) \quad \cdots (4)$$

$$\sum_{j=1U}^{NU} D_{M\,j}(k) = D_{B\,Pow}(k) + D_{C\,Pow}(k) + D_{LD\,Pow}(k) + D_{TOG\,Pow}(k) \quad \cdots (5)$$

$$H_{i\,Level}(k) = H_{i\,Level}(k-1) + H_{i\,INOUT}(k)T \quad \cdots (6)$$
$$_{,i=B,C,LD}$$

$$S_{POWj}(k) = f_j\left(D_{Bj}(k) + D_{Cj}(k) + D_{LDj}(k) + D_{Mj}(k) + D_{OILj}(k), S_{STj}(k)\right) \quad \cdots (7)$$

$$D_{ELE}(k) = S_{TRTELE}(k) + \sum_{j=1U}^{NU} S_{POW\,j}(k) + S_{ELE\,Purchase}(k) \quad \cdots (8)$$

$$D_{ST}(k) = S_{ST}(k) + \sum_{j=1U}^{NU} S_{ST\,j}(k) + S_{ST\,Purchase}(k) \quad \cdots (9)$$

$$LB_{POW\,j} \le S_{POW\,j}(k) \le UB_{POW\,j} \quad \cdots (10)$$

$$LB_{POWDIF\,j} \le \left(S_{POW\,j}(k) - S_{POW\,j}(k-1)\right)/T \le UB_{POWDIF\,j} \quad \cdots (11)$$

$$LB_{i\,LEVEL} \le H_{i\,Level}(k) \le UB_{i\,LEVEL} \quad \cdots (12)$$
$$_{,i=B,C,LD}$$

$$LB_{i\,INOUT} \le H_{i\,INOUT}(k) \le UB_{i\,INOUT} \quad \cdots (13)$$
$$_{,i=B,C,LD}$$

$$total\_cost(k) = P_{ELE}(k)S_{ELE\ Purchase}(k) + P_{ST}(k)S_{ST\ Purchase}(k)$$
$$+ P_{OIL}(k)\sum_{j=1U}^{NU} D_{OIL\ j}(k) + P_{TOG}(k)\big(D_{TOG\ Pow}(k) + D_{TOG\ Mill}(k)\big) \qquad \cdots(14)$$

$$total\_CO2(k) = CO2_{ELE}(k)S_{ELE\ Purchase}(k) + CO2_{ST}(k)S_{ST\ Purchase}(k)$$
$$+ CO2_{OIL}(k)\sum_{j=1U}^{NU} D_{OIL\ j}(k) + CO2_{TOG}(k)\big(D_{TOG\ Pow}(k) + D_{TOG\ Mill}(k)\big)$$
$$+ CO2_B(k)\left(D_B(k) + D_{B\ Pow}(k) + D_{B\ Mill}(k) + \sum_{j=1U}^{NU} D_{B\ j}(k)\right)$$
$$\qquad \cdots(15)$$
$$+ CO2_C(k)\left(D_C(k) + D_{C\ Pow}(k) + D_{C\ Mill}(k) + \sum_{j=1U}^{NU} D_{C\ j}(k)\right)$$
$$+ CO2_{LD}(k)\left(D_{LD}(k) + D_{LD\ Pow}(k) + D_{LD\ Mill}(k) + \sum_{j=1U}^{NU} D_{LD\ j}(k)\right)$$

The total energy operation cost total_cost(k) to be minimized in Step S5 is the sum of heavy oil (OIL) and city gas (TOG) as supplementary fuels, steam (ST), and the electricity purchase amount (ELE) as expressed by the above formula (14). In addition, the unit prices are as shown in Table 2 above, and the total value of the costs from the current time to N periods ahead is calculated as shown in the following formula (16) using the unit prices. As a result, the processing of Step S5 is completed, and the optimization calculation processing proceeds to the processing of Step S6.

$$\sum_{k=1}^{N} total\_cost(k) \qquad \cdots(16)$$

<Step S6>

In the processing of Step S6, the $CO_2$ optimization unit 122 executes optimization calculation using the data acquired in the processing of Steps S1 to S4. In this optimization calculation, a condition for minimizing the total energy operation $CO_2$ emission amount total_CO2(k) for energy operation in the steel mill within a future predetermined period (k = 1 to N) is obtained.

The decision variable (variable searched to minimize cost) in the optimization calculation in Step S6 is the same as that in Step S5 (see Table 4 (third column) and Table 5 (third column)). Furthermore, in Step S6, similarly to Step S5, constraint conditions as shown in the above formulas (1) to (15) are set at the time of optimization calculation.

The total energy operation $CO_2$ emission amount total_CO2(k) to be minimized in Step S6 is shown in the above formula (15). That is, the total energy operation $CO_2$ emission amount total_CO2(k) is the sum of heavy oil (OIL) and city gas (TOG) as supplementary fuels, steam (ST), the electricity purchase amount (ELE), the B gas usage amount ($D_B$), the C gas usage amount ($D_C$), and the LD gas usage amount ($D_{LD}$). The discharge coefficients are as shown in Table 2 above, and the total value of the cost from the current time to N periods ahead is calculated using the discharge coefficients as shown in the following formula (17). As a result, the processing of Step S6 is completed, and the optimization calculation processing proceeds to the processing of Step S7.

$$\sum_{k=1}^{N} total\_CO2(k) \qquad \cdots(17)$$

<Step S7>

In the processing of Step S7, the $CO_2$ cost evaluation unit 123 calculates the unit cost of total energy operation $CO_2$ emission ($CO_2$ cost index) for energy operation in the steel mill within a future predetermined period (k = 1 to N). In the processing of Step S7, the unit cost of total energy operation $CO_2$ emission ($CO_2$ cost index) is calculated based on the total energy operation cost and the total energy operation $CO_2$ emission amount within the future predetermined period (k = 1 to N) obtained by optimization calculation in the processing of Steps S5 and S6.

Specifically, in the processing of Step S7, as illustrated in Table 6 below, the following data calculated by the cost optimization unit 121 and the $CO_2$ optimization unit 122 are used. Then, as shown in the following formula (18-1), the unit cost of total energy operation $CO_2$ emission is calculated based on the ratio of the difference between each total energy operation cost and the difference between each total energy operation $CO_2$ emission amount (total_CO2$_{costmin}$(k), total_CO2$_{CO2min}$(k)).

Cost-minimized total energy operation cost (total_ cost$_{costmin}$(k))
Cost-minimized total energy operation $CO_2$ emission amount (total _CO2$_{costmin}$(k))
$CO_2$-minimized total energy operation cost (total_cost$_{CO2min}$(k))
$CO_2$-minimized total energy operation $CO_2$ emission amount (total_CO2$_{CO2min}$(k))

Table 6

| | Cost | $CO_2$ |
|---|---|---|
| Cost minimization | total_cost$_{costmin}$(k) | total_CO2$_{costmin}$(k) |
| $CO_2$ minimization | total_cost$_{CO2min}$(k) | total_CO2$_{CO2min}$(k) |

$$\frac{-\left(total\_cost_{costmin}\,(k) - total\_cost_{CO2min}\,(k)\right)}{\left(total\_CO2_{costmin}\,(k) - total\_CO2_{CO2min}\,(k)\right)} \qquad \cdots (18\text{-}1)$$

$$\frac{-\left(total\_cost_{costmin}\,(k) - total\_cost_{CO2min}\,(k)\right)}{\left(total\_CO2_{costmin}\,(k) - total\_CO2_{CO2min}\,(k)\right)} / P_{CO2}(k) \qquad \cdots (18\text{-}2)$$

Note that in the processing of Step S7, in order to determine whether the unit cost of total energy operation $CO_2$ emission is equal to or more than a predetermined contract value, the unit cost of total energy operation $CO_2$ emission may be calculated by normalizing the unit cost of total energy operation $CO_2$ emission by a contract value ($P_{CO2}$(k)) as shown in the above formula (18-2). As a result, the processing of Step S7 is completed, and the series of optimization calculation processing ends.

Here, in the processing of Step S6 described above, a constraint condition as shown in formula (19-1) below may be set such that the unit cost of total energy operation $CO_2$ emission becomes equal to or less than a predetermined contract value. This constraint condition is set based on the total energy operation cost and the total energy operation $CO_2$ emission amount, which are calculated in advance by the $CO_2$ cost evaluation unit 123 as an evaluation function to minimize the total energy operation $CO_2$ emission amount. Note that since the following formula (19-1) is a nonlinear constraint, in a case of treating the constraint as a linear optimization problem, it may be converted into a linear constraint as shown in the following formula (19-2).

$$\frac{-\left(total\_cost_{costmin}\,(k) - total\_cost_{CO2min}\,(k)\right)}{\left(total\_CO2_{costmin}\,(k) - total\_CO2_{CO2min}\,(k)\right)} \leq P_{CO2}(k) \quad \cdots (19\text{-}1)$$
$$\Leftrightarrow$$

$$\underbrace{total\_cost_{CO2min}\,(k) + P_{CO2}(k)total\_CO2_{CO2min}\,(k)}_{\text{Calculate in } CO_2 \text{ optimization unit}} \leq \underbrace{total\_cost_{costmin}\,(k) + P_{CO2}(k)total\_CO2_{costmin}\,(k)}_{\text{Calculate in cost optimization unit}} \quad \cdots (19\text{-}2)$$

In the energy operation support system, the information processing device, the display terminal device, the energy operation support method, and the steel mill operation method according to the embodiment described above, cost optimization and $CO_2$ emission optimization are performed in optimization calculation processing. This makes it possible to calculate the total energy operation costs and the total energy operation $CO_2$ emission amounts, and evaluate the difference between the total energy operation costs and the difference between the total energy operation $CO_2$ emission amounts. As a result, it is possible to achieve optimization of operation in consideration of $CO_2$ emission cost.

(Example)

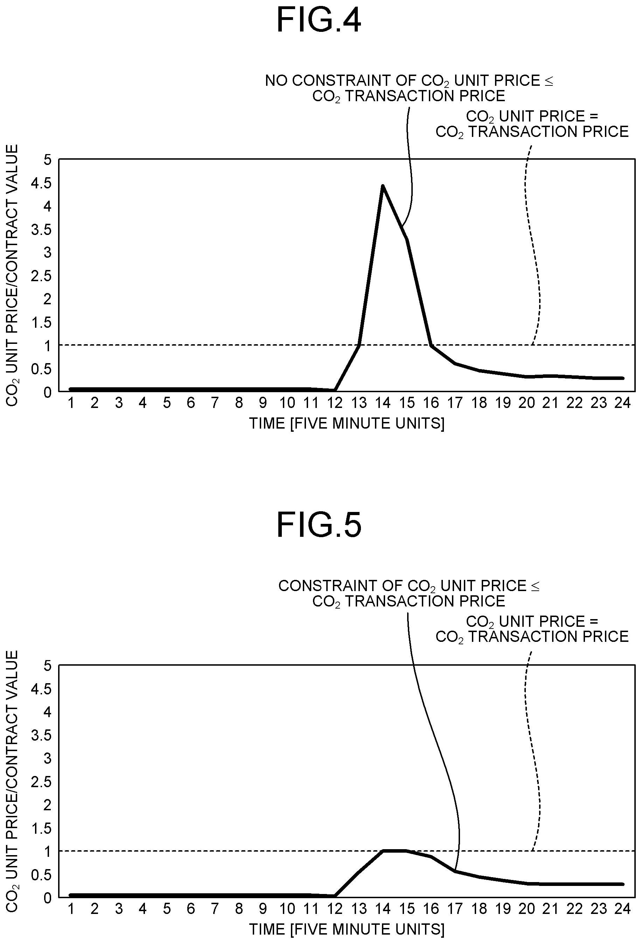

An example of an energy operation support method according to the present invention will be described with reference to FIGS. 4 and 5. In the present embodiment, one cycle was set to five minutes, optimization calculation up to 24 cycles ahead was performed, and the calculation result was displayed by the display terminal device.

FIG. 4 illustrates transition of the unit cost of total energy operation $CO_2$ emission when the optimization calculation is performed without the constraint condition (formulas (19-1) and (19-2) above) that the unit cost of total energy operation $CO_2$ emission becomes equal to or less than the contract value ($CO_2$ transaction price). As illustrated in FIG. 4, the transition of the unit cost of total energy operation $CO_2$ emission calculated by the information processing device shows that the unit cost of total energy operation $CO_2$ emission is equal to or more than the contract value. That is, it can be seen that the time period in which "unit cost of total energy operation $CO_2$ emission ÷ contract value" is one or more is a time period 14 to 15 cycles ahead.

As described above, in the energy operation support method according to the present invention, it is possible to provide guidance on the time period in which the unit cost of total energy operation $CO_2$ emission is equal to or more than the contract value. As a result, it is possible to encourage $CO_2$ transaction according to the contract value in terms of cost.

FIG. 5 illustrates transition of the unit cost of total energy operation $CO_2$ emission when the optimization calculation is performed with a constraint condition (formulas (19-1) and (19-2) above) that the unit cost of total energy operation $CO_2$ emission becomes equal to or less than the contract value. As illustrated in FIG. 5, it can be seen that the unit cost of total energy operation $CO_2$ emission is equal to or less than the contract value even in the time period 14 to 15 cycles ahead in which the unit cost of total energy operation $CO_2$ emission is equal to or more than the contract value in FIG. 4. That is, "unit cost of total energy operation $CO_2$ emission ÷ contract value" is one or less.

As described above, in the energy operation support method according to the present invention, optimization calculation is performed under the constraint condition that the unit cost of total energy operation $CO_2$ emission is equal to or less than the contract value. As a result, it is possible to perform operation while suppressing the unit cost of total energy operation $CO_2$ emission from becoming equal to or more than the contract value.

As described above, the energy operation support system, the information processing device, the display terminal device, the energy operation support method, and the steel mill operation method according to the present invention have been specifically described with reference to the embodiment and example for carrying out the invention. However, the gist of the present invention is not limited to these descriptions, and should be widely interpreted based on the description of the claims. It goes without saying that various changes, modifications, and the like based on these descriptions are also included in the gist of the present invention.

Reference Signs List

1     ENERGY OPERATION SUPPORT SYSTEM

10     INFORMATION PROCESSING DEVICE
11     INFORMATION ACQUISITION UNIT
12     OPTIMIZATION UNIT
121    COST OPTIMIZATION UNIT
122    $CO_2$ OPTIMIZATION UNIT
123    $CO_2$ COST EVALUATION UNIT
13     OUTPUT UNIT
20     OPERATIONAL PLAN AND ACHIEVEMENT DATABASE
30     DISPLAY TERMINAL DEVICE
N      NETWORK

**Claims**

**1.**   An energy operation support system of a steel mill comprising:

an information processing device; and
a display terminal device, wherein
the information processing device includes:

an information acquisition unit configured to acquire information regarding energy utilities for each factory within the steel mill and information regarding an operational plan of an energy facility in the steel mill;
an optimization unit configured to calculate an operation condition of the energy facility; and
an output unit configured to output information calculated by the optimization unit, the information including the operation condition of the energy facility,

the optimization unit includes:

a cost optimization unit configured to calculate an operation condition of the energy facility based on an evaluation of a total energy operation cost of the steel mill,
a $CO_2$ optimization unit configured to calculate an operation condition of the energy facility based on an evaluation of a total energy operation $CO_2$ emission amount of the steel mill; and
a $CO_2$ cost evaluation unit configured to calculate a $CO_2$ cost index in energy operation of the steel mill based on the total energy operation cost of the steel mill calculated by the cost optimization unit and the total energy operation $CO_2$ emission amount calculated by the $CO_2$ optimization unit, and

the display terminal device includes:

an information acquisition unit configured to acquire at least the total energy operation cost, the total energy operation $CO_2$ emission amount, and the $CO_2$ cost index from the information processing device; and
an information display unit configured to display energy operation information of the steel mill including the total energy operation cost, the total energy operation $CO_2$ emission amount, and the $CO_2$ cost index.

2.  The energy operation support system according to claim 1, wherein

the cost optimization unit is configured to calculate a total energy operation cost based on the evaluation of the total energy operation cost and a total energy operation $CO_2$ emission amount based on the evaluation of the total energy operation cost,
the $CO_2$ optimization unit is configured to calculate a total energy operation cost based on the evaluation of the total energy operation $CO_2$ emission amount and a total energy operation $CO_2$ emission amount based on the evaluation of the total energy operation $CO_2$ emission amount, and
the $CO_2$ cost evaluation unit is configured to

calculate a unit cost of total energy operation $CO_2$ emission, that is the $CO_2$ cost index, based on a ratio of a difference between the total energy operation costs and a difference between the total energy operation $CO_2$ emission amounts, and
determine whether or not the unit cost of total energy operation $CO_2$ emission is equal to or more than a contract value given in advance.

3.  The energy operation support system according to claim 2, wherein
the $CO_2$ optimization unit is configured to calculate a total energy operation cost based on the evaluation of the total energy operation $CO_2$ emission amount and a total energy operation $CO_2$ emission amount based on the evaluation of the total energy operation $CO_2$ emission amount such that the unit cost of total energy operation $CO_2$ emission is equal to or less than the contract value.

4.  The energy operation support system according to claim 1, wherein the energy utilities include gas, steam, and electricity.

5.  The energy operation support system according to claim 1, wherein the energy facility includes a mixed gas production facility, a gas holder, a top pressure recovery turbine system, and a power generation facility using by-product gas, heavy oil, or extraction steam.

6.  The energy operation support system according to claim 1, wherein

the information regarding an operational plan of the energy facility includes a setting value of the energy facility and a contract value of a transaction contract, and
the transaction contract includes a purchase contract associated with use of heavy oil, city gas, and steam, a purchase contract associated with purchase of electricity, and a transaction contract when trading $CO_2$ emissions.

7. The energy operation support system according to claim 1, wherein the total energy operation cost includes a cost associated with use of heavy oil, city gas, and steam, and a cost associated with purchase of electricity.

8. The energy operation support system according to claim 1, wherein the total energy operation $CO_2$ emission amount includes a $CO_2$ emission amount associated with use of heavy oil, city gas, and steam, a $CO_2$ emission amount associated with purchase of electricity, and a $CO_2$ emission amount associated with use of blast furnace gas, coke gas, and steelmaking gas generated as by-product gas in a steel mill.

9. An information processing device constituting an energy operation support system in a steel mill together with a display terminal device, the information processing device comprising:

    an information acquisition unit configured to acquire information regarding energy utilities for each factory within a steel mill and information regarding an operational plan of an energy facility in the steel mill;
    an optimization unit configured to calculate an operation condition of the energy facility; and
    an output unit configured to output information calculated by the optimization unit, the information including an operation condition of the energy facility, wherein
    the optimization unit includes

    a cost optimization unit configured to calculate the operation condition of the energy facility based on an evaluation of a total energy operation cost of the steel mill,
    a $CO_2$ optimization unit configured to calculate the operation condition of the energy facility based on an evaluation of a total energy operation $CO_2$ emission amount of the steel mill, and
    a $CO_2$ cost evaluation unit configured to calculate a $CO_2$ cost index in energy operation of the steel mill based on the total energy operation cost of the steel mill calculated by the cost optimization unit and the total energy operation $CO_2$ emission amount calculated by the $CO_2$ optimization unit.

10. A display terminal device constituting an energy operation support system in a steel mill together with an information processing device, wherein the display terminal device is configured to

    acquire: an operation condition of an energy facility and a total energy operation cost calculated by a cost optimization unit of the information processing device based on an evaluation of the total energy operation cost of the steel mill; an operation condition of the energy facility and a total energy operation $CO_2$ emission amount calculated by a $CO_2$ optimization unit of the information processing device based on an evaluation of the total energy operation $CO_2$ emission amount of the steel mill; and a $CO_2$ cost index calculated by a $CO_2$ cost evaluation unit of the information processing device, and
    display energy operation information of the steel mill, the information including the total energy operation cost, the total energy operation $CO_2$ emission amount, and the $CO_2$ cost index.

11. An energy operation support method of a steel mill, the method comprising:

    an information acquisition step of acquiring, by an information acquisition unit of an information processing device, information regarding energy utilities for each factory within the steel mill and information regarding an operational plan of an energy facility in the steel mill;
    an optimization step of calculating, by an optimization unit of the information processing device, an operation condition of the energy facility;
    an output step of outputting, by an output unit of the information processing device, the information calculated in the optimization step, the information including an operation condition of the energy facility; and
    an information display step by the display terminal device, wherein
    the optimization step includes

    a cost optimization step of calculating an operation condition of the energy facility based on an evaluation of a total energy operation cost of the steel mill,
    a $CO_2$ optimization step of calculating an operation condition of the energy facility based on an evaluation of a total energy operation $CO_2$ emission amount of the steel mill, and
    a $CO_2$ cost evaluation step of calculating a $CO_2$ cost index in energy operation of the steel mill based on the total energy operation cost of the steel mill calculated in the cost optimization step and the total energy operation $CO_2$ emission amount calculated in the $CO_2$ optimization step, and

the information display step displays energy operation information of the steel mill including the total energy operation cost, the total energy operation $CO_2$ emission amount, and the $CO_2$ cost index.

12. A steel mill operation method, comprising
   changing an operation condition of the steel mill based on energy operation information of the steel mill displayed by a display terminal device of the energy operation support system according to claim 1.

# FIG.1

20 — OPERATIONAL PLAN AND ACHIEVEMENT DATABASE

30 — DISPLAY TERMINAL DEVICE

N

10 — INFORMATION PROCESSING DEVICE

1

# FIG.2

10 — INFORMATION PROCESSING DEVICE

11 — INFORMATION ACQUISITION UNIT

12 — OPTIMIZATION UNIT

121 — COST OPTIMIZATION UNIT

122 — $CO_2$ OPTIMIZATION UNIT

123 — $CO_2$ COST EVALUATION UNIT

13 — OUTPUT UNIT

# FIG.3

```
        ┌─────────────┐
        │    START    │
        └──────┬──────┘
               │       ⌐S1
        ┌──────▼──────────────┐
        │  ACQUIRE SET VALUE  │
        └──────┬──────────────┘
               │       ⌐S2
        ┌──────▼──────────────────┐
        │ ACQUIRE CONTRACT VALUE  │
        └──────┬──────────────────┘
               │       ⌐S3
        ┌──────▼──────────────────┐
        │  ACQUIRE ACTUAL VALUE   │
        └──────┬──────────────────┘
               │       ⌐S4
        ┌──────▼──────────────────┐
        │ ACQUIRE PREDICTED VALUE │
        └──────┬──────────────────┘
               │       ⌐S5
        ┌──────▼──────────────┐
        │  COST OPTIMIZATION   │
        │    CALCULATION       │
        └──────┬──────────────┘
               │       ⌐S6
        ┌──────▼──────────────┐
        │  CO₂ OPTIMIZATION    │
        │    CALCULATION       │
        └──────┬──────────────┘
               │       ⌐S7
        ┌──────▼────────────────────┐
        │ CALCULATE CO₂ COST INDEX   │
        └──────┬────────────────────┘
               │
        ┌──────▼──────┐
        │     END     │
        └─────────────┘
```

S1 ACQUIRE SET VALUE

S2 ACQUIRE CONTRACT VALUE

S3 ACQUIRE ACTUAL VALUE

S4 ACQUIRE PREDICTED VALUE

S5 COST OPTIMIZATION CALCULATION

S6 $CO_2$ OPTIMIZATION CALCULATION

S7 CALCULATE $CO_2$ COST INDEX

# FIG.4

NO CONSTRAINT OF $CO_2$ UNIT PRICE $\leq$
$CO_2$ TRANSACTION PRICE

$CO_2$ UNIT PRICE =
$CO_2$ TRANSACTION PRICE

CO₂ UNIT PRICE/CONTRACT VALUE

TIME [FIVE MINUTE UNITS]

# FIG.5

CONSTRAINT OF $CO_2$ UNIT PRICE $\leq$
$CO_2$ TRANSACTION PRICE

$CO_2$ UNIT PRICE =
$CO_2$ TRANSACTION PRICE

CO₂ UNIT PRICE/CONTRACT VALUE

TIME [FIVE MINUTE UNITS]

## INTERNATIONAL SEARCH REPORT

| International application No. |
| --- |
| **PCT/JP2023/030146** |

**A.   CLASSIFICATION OF SUBJECT MATTER**

*G06Q 10/00*(2023.01)i; *G06Q 50/04*(2012.01)i
FI:   G06Q10/00; G06Q50/04

According to International Patent Classification (IPC) or to both national classification and IPC

**B.   FIELDS SEARCHED**

Minimum documentation searched (classification system followed by classification symbols)

G06Q10/00; G06Q50/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
| --- | --- | --- |
| A | JP 2005-261021 A (MITSUBISHI ELECTRIC CORP.) 22 September 2005 (2005-09-22)<br>entire text, all drawings | 1-12 |
| A | WO 2021/200118 A1 (JFE STEEL CORP.) 07 October 2021 (2021-10-07)<br>entire text, all drawings | 1-12 |
| A | WO 2022/137311 A1 (JFE STEEL CORP.) 30 June 2022 (2022-06-30)<br>entire text, all drawings | 1-12 |
| A | WO 2021/210290 A1 (JFE STEEL CORP.) 21 October 2021 (2021-10-21)<br>entire text, all drawings | 1-12 |

☐ Further documents are listed in the continuation of Box C.     ☑ See patent family annex.

| | | |
| --- | --- | --- |
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **12 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/030146**

| Patent document cited in search report | | | Publication date (day/month/year) | Patent family member(s) | | | Publication date (day/month/year) |
|---|---|---|---|---|---|---|---|
| JP | 2005-261021 | A | 22 September 2005 | (Family: none) | | | |
| WO | 2021/200118 | A1 | 07 October 2021 | JP | 2021-163085 | A | |
| | | | | US | 2023/0151447 | A1 | |
| | | | | EP | 4130908 | A1 | |
| | | | | CN | 115315669 | A | |
| | | | | KR | 10-2022-0143920 | A | |
| WO | 2022/137311 | A1 | 30 June 2022 | JP | 6954497 | B1 | |
| WO | 2021/210290 | A1 | 21 October 2021 | EP | 4138008 | A1 | |
| | | | | KR | 10-2022-0132576 | A | |
| | | | | CN | 115210730 | A | |
| | | | | JP | 7040676 | B2 | |

Form PCT/ISA/210 (patent family annex) (January 2015)

24

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7028272 B